(19) Europäisches Patentamt
European Patent Office
Office européen des brevets

(11) Veröffentlichungsnummer: **0 223 067 B1**

# (12) EUROPÄISCHE PATENTSCHRIFT

(45) Veröffentlichungstag der Patentschrift: **27.12.90**

(51) Int. Cl.⁵: **C08L 83/04**, C08F 283/12, C09K 3/10

(21) Anmeldenummer: **86114291.7**

(22) Anmeldetag: **15.10.86**

## (54) Kleb- und Dichtungsmassen und deren Verwendung.

(30) Priorität: **15.10.85 DE 3536716**

(43) Veröffentlichungstag der Anmeldung: **27.05.87 Patentblatt 87/22**

(45) Bekanntmachung des Hinweises auf die Patenterteilung: **27.12.90 Patentblatt 90/52**

(84) Benannte Vertragsstaaten: **DE ES FR GB IT**

(56) Entgegenhaltungen:
**EP-A- 0 036 648**
**EP-A- 0 078 548**
**FR-A- 2 413 416**

(73) Patentinhaber: **FRAUNHOFER-GESELLSCHAFT ZUR FÖRDERUNG DER ANGEWANDTEN FORSCHUNG E.V., Leonrodstrasse 54, D-8000 München 19(DE)**

(72) Erfinder: **Philipp, Gottfried, St. Josef-Strasse 7, D-8150 Holzkirchen(DE)**
Erfinder: **Schmidt, Helmut, Badstrasse 2, D-8705 Zellingen(DE)**
Erfinder: **Patzelt, Helmut, Ringstrasse 26, D-5418 Marienrachdorf(DE)**

(74) Vertreter: **Barz, Peter, Dr. et al, Patentanwälte Dipl.-Ing. G. Dannenberg Dr. P. Weinhold, Dr. D. Gudel Dipl.-Ing. S. Schubert, Dr. P. Barz Siegfriedstrasse 8, D-8000 München 40(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

## Beschreibung

Die Erfindung betrifft Kleb- und Dichtungsmassen auf Basis von Kieselsäureheteropolykondensaten, die sich zum Verbinden oder Abdichten von Substraten aus Glas, Metall, Kunststoff oder anderen Werkstoffen eignen, insbesondere aber für Glassubstrate.

Eine dauerhafte, mechanisch und thermisch beständige Verbindung von Glasscheiben oder Abdichtung von sogenannten Ganzglas-Doppelscheiben ist mit rein organischen Kleb- und Dichtungsmassen nur schwer erzielbar, da die auf der Glasoberfläche stets vorhandene Wasserhaut die Haftung des Dichtungsmaterials beeinträchtigt. Insbesondere unter Feuchteeinfluß und bei Temperaturänderungen entstehen zusätzliche Haftungsverluste, die zu Ablösungen oder Wasserdampfeinbrüchen mit damit verbundener Trübung der Scheiben und Korrosion von Metallteilen führen.

Mit herkömmlichen Kleb- und Dichtungsmassen auf Siliconbasis wird zwar eine etwas bessere Glashaftung als mit rein organischen Klebstoffen erzielt, jedoch verspröden diese Materialien bei tiefen Temperaturen bzw. zeigen eine zu starke Viskositätserniedrigung bei höheren Temperaturen, so daß es insbesondere bei höherer mechanischer Belastung ebenfalls zu Undichtigkeiten kommt.

Auch die in der EP-A 36 648 beschriebenen Heißsiegellacke auf Basis von Kieselsäureheteropolykondensaten besitzen keine ausreichend hohe mechanische Festigkeit.

Aus der EP-A 78 548 sind vernetzbare titan- und zirkonhaltige Kieselsäureheteropolykondensate bekannt, die als Materialien für optische Linsen, insbesondere Kontaktlinsen, geeignet sind.

Aufgabe der Erfindung ist es, Kleb- und Dichtungsmassen bereitzustellen, die ausgezeichnete Substrathaftung, vor allem gegenüber Glas, aufweisen und innerhalb eines breiteren Temperaturbereichs und bei höherer mechanischer Belastung als herkömmliche Kleb- und Dichtungsmassen dauerhafte, mechanisch und temperaturwechselbeständige Abdichtung und Verklebungen ermöglichen.

Es wurde nun gefunden, daß bestimmte organisch modifizierte Silicate, die im Molekülgerüst eine organisch vernetzbare (z.B. polymerisierbare) Gruppe aufweisen, bei zusätzlicher Quervernetzung mit sich selbst, einem ähnlichen Kieselsäureheteropolykondensat oder anderen reaktiven Monomeren oder Prepolymeren Produkte ergeben, die zusätzlich zu der bekannt guten Substrathaftung aufgrund der Wechselwirkung zwischen den Silanolgruppen des Polykondensats und der Substratoberfläche überraschend dauerhafte, wasser-, druck-, temperatur- und temperaturwechselbeständige Abdichtungen und Klebverbindungen ermöglichen.

Gegenstand der Erfindung sind Kleb- und Dichtungsmassen auf Basis von Kieselsäureheteropolykondensaten, enthaltend

(A) mindestens ein Kieselsäureheteropolykondensat, das erhalten worden ist durch Kondensation von
(a) einem oder mehreren Organosilanen der Formel I

$$R_mSiX_{4-m} \qquad (I)$$

in der R Alkyl, Alkenyl, Aryl, Alkylaryl, Arylalkyl, Alkenylaryl oder Arylalkenyl bedeutet, X Wasserstoff, Halogen, Hydroxy, Alkoxy, Acyloxy oder die Gruppe $-NR'_2$ (R' = Wasserstoff oder Alkyl) darstellt und m den Wert 1, 2 oder 3 hat; und
(b) einem oder mehreren siliciumfunktionellen Silanen der allgemeinen Formel II

$$SiX_4 \qquad (II)$$

in der X die vorstehende Bedeutung hat, jedoch nicht alle Reste X Wasserstoff sind;
und gegebenenfalls einer oder mehreren der folgenden Komponenten (c) und/oder (d);
(c) einem oder mehreren organofunktionellen Silanen der allgemeinen Formel III

$$R_n(R''Y)_pSiX_{(4-n-p)} \qquad (III)$$

in der R und X die vorstehende Bedeutung haben, R'' Alkylen, Alkenylen, Arylen, Alkylenarylen oder Alkenylenarylen bedeutet, wobei diese Reste durch Sauerstoff- oder Schwefelatome oder -NH-Gruppen unterbrochen sein können, Y Halogen oder eine gegebenenfalls substituierte Amino-, Amid-, Aldehyd-, Alkylcarbonyl-, Carboxy-, Hydroxy-, Mercapto-, Cyano-, Alkoxy-, Alkoxycarbonyl-, Sulfonsäure-, Phosphorsäure-, Acryloxy-, Methacryloxy-, Epoxy- oder Vinylgruppe ist, n den Wert 0, 1 oder 2 und p den Wert 1, 2 oder 3 haben, wobei n + p den Wert 1, 2 oder 3 hat;
(d) einem oder mehreren im Reaktionsmedium löslichen, schwerflüchtigen Oxiden eines Elementes der Hauptgruppen Ia bis Va oder der Nebengruppen IVb oder Vb des Periodensystems mit Ausnahme von Titan und Zirkon oder einer oder mehreren im Reaktionsmedium löslichen, unter den Reaktionsbedingungen ein schwerflüchtiges Oxid bildenden Verbindungen eines dieser Elemente mit Ausnahme von Titan und Zirkon;

wobei mindestens eine Ausgangskomponente für das Kieselsäureheteropolykondensat (A) mindestens eine reaktive Gruppe aufweist, die in Gegenwart des Katalysators (B) sowie des gegebenenfalls verwendeten copolymerisierbaren organischen Monomers (C) eine organische Vernetzungsreaktion eingeht und wobei anstelle der Silane (a), (b) und (c) vorkondensierte, im Reaktionsmedium lösliche Oligomere dieser Silane eingesetzt werden können, gegebenenfalls in Gegenwart eines organischen Lösungsmittels und gegebenenfalls eines Kondensationskatalysators,

(B) mindestens einen thermisch oder UV-aktiven Polymerisations- oder Vernetzungskatalysator sowie gegebenenfalls

(C) mindestens ein mit dem Kieselsäureheteropolykondensat copolymerisierbares organisches Monomer oder Prepolymer.

Kieselsäureheteropolykondensat A

Das Kieselsäureheteropolykondensat (A) ist aufgebaut aus Struktureinheiten, die sich von den Ausgangskomponenten (a) und (b) sowie gegebenenfalls einer oder mehreren der Komponenten (c) und/oder (d) ableiten.

In den vorstehenden Formeln I, II und III können mehrmals vorhandene Reste R, R′, R″, X bzw. Y bei einer Verbindung jeweils die gleiche oder verschiedene Bedeutung haben.

Die Alkylreste bedeuten z.B. geradkettige, verzweigte oder cyclische Reste mit 1 bis 20, vorzugsweise 1 bis 10 Kohlenstoffatomen und insbesondere niedere Alkylreste mit 1 bis 6, vorzugsweise 1 bis 4 Kohlenstoffatomen. Spezielle Beispiele sind Methyl, Ethyl, n-Propyl, Isopropyl, n-Butyl, sek.-Butyl, tert.-Butyl, Isobutyl, n-Pentyl, n-Hexyl und Cyclohexyl.

Die Arylreste enthalten z.B. 6 bis 25, vorzugsweise 6 bis 14 und insbesondere 6 bis 10 Kohlenstoffatome. Spezielle Beispiele sind Phenyl und Naphthyl, wobei Phenyl bevorzugt ist.

Die Alkenylreste sind z.B. geradkettige, verzweigte oder cyclische Reste mit 2 bis 20, vorzugsweise 2 bis 10 Kohlenstoffatomen und insbesondere niedere Alkenylreste, wie Vinyl, Allyl und 2-Butenyl.

Die Alkylaryl-, Arylalkyl-, Alkenylaryl-, Arylalkenyl-, Alkylen-, Alkenylen-, Arylen-, Alkylenarylen-, Alkenylenarylen-, Alkoxy-, Acyloxy-, Alkylamino-, Dialkylamino-, Alkylcarbonyl-, Alkoxycarbonyl- und die substituierten Aminoreste oder Amidreste Y leiten sich z.B. von den vorstehend genannten Alkyl-, Aryl- und Alkenylresten ab. Spezielle Beispiele sind Methoxy, Ethoxy, n- und i-Propoxy, n-, sek.- und tert.-Butoxy, Isobutoxy, β-Methoxyethoxy, Acetyloxy, Propionyloxy, Monomethylamino, Monoethylamino, Dimethylamino, Diethylamino, Ethylen, Propylen, Butylen, Phenylen, Toluylen, Benzyl, Styryl, Methylcarbonyl, Ethylcarbonyl, Methoxycarbonyl und Ethoxycarbonyl.

Die genannten Reste können gegebenenfalls übliche Substituenten tragen, z.B. Halogenatome, niedere Alkylreste, Hydroxy-, Nitro- oder Aminogruppen.

Unter den Halogenen sind Fluor, Chlor und Brom bevorzugt und Chlor besonders bevorzugt.

Vorzugsweise haben m den Wert 2, n den Wert 0 und p den Wert 1.

Spezielle Beispiele für Organosilane (a) sind:
$CH_3$-Si-$Cl_3$, $CH_3$-Si-$(OC_2H_5)_3$, $C_2H_5$-Si-$Cl_3$,
$C_2H_5$-Si-$(OC_2H_5)_3$, $CH_2$=CH-Si-$(OC_2H_5)_3$,
$CH_2$=CH-Si-$(OC_2H_4OCH_3)_3$, $CH_2$=CH-Si-$(OOCCH_2)_3$,
$(CH_3)_2$-Si-$Cl_2$, $(CH_3)_2$-Si-$(OC_2H_5)_2$, $(C_2H_5)_2$-Si-$(OC_2H_5)_2$,
$(CH_3)$ $(CH_2$=CH)-Si-$Cl_2$, $(CH_3)_3$-Si-Cl, $(C_2H_5)_3$-Si-Cl,
(t-$C_4H_9$)$(CH_3)_2$-Si-Cl, $(CH_3)_2$($CH_2$=CH-$CH_2$)-Si-Cl,
$(CH_3)_2$-Si-$(OCH_3)_2$, $(CH_3)_2$-Si-$(OCH_3)_2$, $(C_6H_5)_2$-Si-$Cl_2$,
$(C_6H_5)_2$-Si-$(OC_2H_5)_2$, $CH_2$=CH-Si-$Cl_3$, $CH_2$=CH-$CH_2$-Si-$(OC_2H_5)_3$,
$CH_2$=CH-$CH_2$-Si-$(CH_3COO)_3$, (i-$C_3H_7$)$_3$-Si-OH und
$(C_6H_5)_2$-Si-$(OH)_2$.

Spezielle Beispiele für siliciumfunktionelle Silane (b) sind:
$SiCl_4$, $HSiCl_3$, $Si(OCH_3)_4$, $Si(OC_2H_5)_4$ und $Si(CH_3COO)_4$.

Bei den organofunktionellen Silanen (c) kann die Brückengruppe R" gegebenenfalls durch Sauerstoff- oder Schwefelatome oder -NH-Gruppen unterbrochen sein. Vorzugsweise entstehen auf diese Art 2 bis 10 sich wiederholende Struktureinheiten.

Spezielle Beispiele für organofunktionelle Silane (c) sind:
$(C_2H_5O)_3$-Si-$C_3H_6$-OH, $(C_2H_5O)_3$-Si-$C_6H_4$-$NH_2$,
$(CH_3O)_3$-Si-$C_3H_6Cl$, $(C_2H_5O)_3$-Si-$C_3H_6$-$NH_2$,
$(C_2H_5O)_3$-Si-$C_3H_6$-CN, $(CH_3O)_3$-Si-$C_3H_6$-SH,
$(CH_3O)_3$-Si-$C_3H_6$-NH-$C_2H_4$-$NH_2$,
$(CH_3O)_3$-Si-$C_3H_6$-NH-$C_2H_4$-NH-$C_2H_4$-$NH_2$,

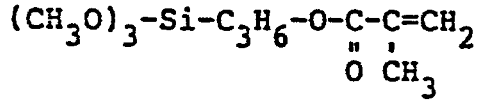

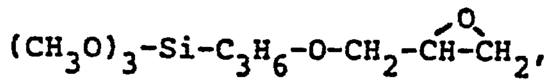

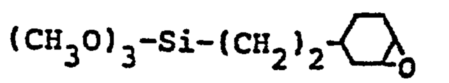

Diese Silane sind zum Teil Handelsprodukte oder sie lassen sich nach bekannten Methoden herstellen; vgl. W. Noll, "Chemie und Technologie der Silicone", Verlag Chemie GmbH, Weinheim/Bergstrasse (1968).

Anstelle der monomeren Silane (a), (b) und (c) können gegebenenfalls auch vorkondensierte, im Reaktionsmedium lösliche Oligomere dieser Silane eingesetzt werden; d.h. geradkettige oder cyclische, niedermolekulare Teilkondensate (Polyorganosiloxane) mit einem Kondensationsgrad von z.B. etwa 2 bis 100.

Als Komponente (d) werden im Reaktionsmedium lösliche, schwerflüchtige Oxide oder derartige schwerflüchtige Oxide bildende Verbindungen von Elementen der Hauptgruppen Ia bis Va oder der Nebengruppen IVb oder Vb des Periodensystems eingesetzt. Vorzugsweise leitet sich die Komponente (d) von folgenden Elementen ab; Na, K, Mg, Ca, B, Al, Sn, Pb, P, As, Sb und/oder V, wobei Na, Ca, Mg, B, Al, Sn und P besonders bevorzugt sind.

Unter den schwerflüchtigen Oxiden sind $Na_2O$, $K_2O$, CaO und $P_2O_5$ bevorzugt und $B_2O_3$ besonders bevorzugt.

Im Reaktionsmedium lösliche, schwerflüchtige Oxide bildende Verbindungen sind z.B. anorganische Säuren, wie Phosphorsäure und Borsäure, sowie deren Ester, Halogenide und Salze. Ferner eignen sich Hydroxide, wie NaOH, KOH oder $Ca(OH)_2$, Halogenide, wie $SnCl_4$ und $PCl_5$, und Alkoxide, wie NaOR, KOR, $Ca(OR)_2$ oder $Al(OR)_3$, wobei sich R von niederen Alkoholen, wie Methanol, Ethanol, Propanol oder Butanol, ableitet. Ebenfalls verwendbare Ausgangsverbindungen sind entsprechende Salze mit flüchtigen Säuren, z.B. Acetate, basische Acetate, z.B. basisches Bleiacetat, und Formiate.

Die Auswahl der Ausgangskomponenten für das Kieselsäureheteropolykondensat (A) erfolgt derart, daß das erhaltene Produkt reaktive Gruppen aufweist, die in Gegenwart des Katalysators (B) sowie des gegebenenfalls verwendeten organischen Monomers oder Prepolymers (C) eine organische Vernetzungsreaktion eingehen. Beispiele für derartige vernetzbare Gruppen sind polymerisierbare Gruppen, wie Vinyl, Allyl, Methacryloxypropyl und Glycidoxypropyl, sowie einer Additionsreaktion zugängliche Gruppen, z.B. Methyl oder Amino.

Im allgemeinen werden, bezogen auf die Gesamt-Molzahl der Ausgangskomponenten, 50 bis 100, vorzugsweise 70 bis 100 Molprozent der Komponente (a), 0 bis 50, vorzugsweise 0 bis 30 Molprozent der Komponente (b), 0 bis 50, vorzugsweise 0 bis 30 Molprozent der Komponente (c) und 0 bis 30, vorzugsweise 0 bis 20 Molprozent der Komponente (d) eingesetzt.

Zur Herstellung des Kieselsäureheteropolykondensats (A) werden die Ausgangskomponenten im gewünschten Mengenverhältnis hydrolysiert und polykondensiert. In einer bevorzugten Ausführungsform erfolgt die Herstellung derart, daß man die Ausgangskomponenten nicht-hydrolytisch oder mit einer geringeren Wassermenge als der zur vollständigen Hydrolyse aller eingesetzten hydrolysierbaren Gruppen stöchiometrisch erforderlichen Menge vorkondensiert. Zur Vorkondensation wird vorzugsweise ein organisches Lösungsmittel angewandt, z.B. ein Alkohol, wie Ethanol, Propanol, Isopropanol oder Butanol, ein Ether, wie Dimethoxyethan, ein Ester, wie Dimethylglykolacetat, oder ein Keton, wie Aceton oder Methylethylketon.

Gegebenenfalls erfolgt die Vorkondensation in Gegenwart eines Kondensationskatalysators, z.B. einer Protonen oder Hydroxylionen abspaltenden Verbindung oder eines Amins. Spezielle Beispiele sind organische oder anorganische Säuren, wie Salzsäure, Schwefelsäure, Phosphorsäure, Ameisensäure oder Essigsäure, sowie organische oder anorganische Basen, wie Ammoniak, Alkali- oder Erdalkalimetallhydroxide, z.B. Natrium-, Kalium- oder Calciumhydroxid, und im Reaktionsmedium lösliche Amine, z.B. niedere Alkylamine oder Alkanolamine. Hierbei sind flüchtige Säuren und Basen, insbesondere Salzsäure, Ammoniak und Triethylamin, besonders bevorzugt. Die Gesamt-Katalysatorkonzentration kann z.B. bis zu 3 Mol/Liter betragen.

Die Vorkondensation wird üblicherweise bei Temperaturen von 20 bis 200°C, vorzugsweise 50 bis 150°C und insbesondere bei der Siedetemperatur des Lösungsmittels durchgeführt.

Gegebenenfalls kann man zunächst eine oder mehrere Ausgangskomponenten oder einen Teil einer, mehrerer oder aller Ausgangskomponenten vorkondensieren, dann die restlichen Ausgangskomponenten zumischen und anschließend nach dem Verfahren der Vorkondensation oder Weiterkondensation co-kondensieren.

Die Vorkondensation wird soweit geführt, daß das entstehende Vorkondensat noch flüssige Konsistenz hat.

Die anschließende Weiterkondensation des Vorkondensats, vorzugsweise der eingedampften Lösung des Vorkondensats, erfolgt in Gegenwart mindestens der Wassermenge, die zur Hydrolyse der noch verbliebenen hydrolysierbaren Gruppen stöchiometrisch erforderlich ist, vorzugsweise jedoch mit einer überstöchiometrischen Wassermenge. Die Weiterkondensation erfolgt vorzugsweise in Gegenwart eines der vorstehend genannten Kondensationskatalysators, wobei saure Katalysatoren bevorzugt sind. Die Gesamt-Katalysatorkonzentration kann z.B. bis zu 5 Mol/Liter betragen. Bei der Weiterkondensation kann gegebenenfalls auch eines der vorstehend genannten organischen Lösungsmittel anwesend sein oder zugesetzt werden.

Die Weiterkondensation erfolgt gewöhnlich bei Temperaturen von Raumtemperatur bis 100°C, vorzugsweise Raumtemperatur bis 80°C. Die Kondensationszeit richtet sich nach den jeweiligen Ausgangskomponenten und deren Mengenanteilen, dem verwendeten Katalysator, der Reaktionstemperatur etc. Im allgemeinen wird die Weiterkondensation soweit geführt, daß das erhaltene Kieselsäureheteropolykondensat noch genügend freie Silanolgruppen aufweist und nach Abdampfen des gegebenenfalls verwendeten organischen Lösungsmittel hochviskos, jedoch noch gießbar ist.

Das erhaltene Polykondensat kann gegebenenfalls noch einer einige Minuten bis mehrere Stunden dauernden Wärmebehandlung bei 50 bis 250°C unterzogen werden, um die Reaktivität und Plastizität einzustellen.

Katalysator B

Die erfindungsgemäßen Kleb- und Dichtungsmassen enthalten einen Polymerisations- oder Vernetzungskatalysator, der beim Aushärten der Massen eine organische Quervernetzung des anorganischen (silicatischen) Grundgerüsts der Kieselsäureheteropolykondensate bewirkt.

Für die thermisch initiierte organische Quervernetzung geeignete Katalysatoren sind z.B. organische Peroxide, vorzugsweise Diacylperoxide, wie Benzoylperoxid und Lauroylperoxid; Ketoperoxide, wie Acetonperoxid und Cyclohexanonperoxid; Kohlenwasserstoffperoxide, wie tert.-Butylhydroperoxid, Cumolhydroperoxid und Decahydronaphthalinhydroperoxid; Dikohlenwasserstoffperoxide, wie Di-tert.-butylperoxid und Dicumylperoxid; Perketale, wie 1,1-Di-tert.-butylperoxy-3,3,5-trimethylcyclohexan; Perester, wie tert.-Butylperbenzoat, tert.-Butylperoxyisopropylpercarbonat, Di-2-ethylhexylperoxydicarbonat, Bis(4-tert.-butylcyclohexyl)-peroxydicarbonat, Butylcyclohexylpercarbonat, Bicyclohexylperoxydicarbonat, tert.-Butylperpivalat, tert.-Butylperoctoat und tert.-Butylpermaleinat; sowie Acetylcyclohexansulfonylperoxid. Ebenfalls geeignet sind übliche Azoinitiatoren, wie Azobisisobutyronitril.

Für die UV-initiierte organische Quervernetzung eignen sich übliche UV-Initiatoren, wie 1-Hydroxycyclohexylphenylketon, Benzildimethylketal, 2-Hydroxy-2-methyl-1-phenyl-1-propanon, Benzoinbutylether, Benzoinethylether, Benzophenon und Benzoin.

Der Katalysator wird gewöhnlich in einer Menge von 0,01 bis 5 Gewichtsprozent, bezogen auf das Gesamtgewicht der Kleb-und Dichtungsmasse, eingesetzt.

Reaktives Monomer oder Prepolymer C

Zur Verbesserung der Elastizität, der mechanischen Festigkeit und anderer Anwendungseigenschaften enthalten die Kleb- und Dichtungsmassen gegebenenfalls ein mit dem Kieselsäureheteropolykondensat reaktives, z.B. copolymerisierbares, organisches Monomer oder Prepolymer. Hierbei sind (Meth)-acrylmonomere und -prepolymere bevorzugt, z.B. (Methy)acrylsäureester, wie Methyl(meth)acrylat, Ethyl(meth)acrylat, Butyl(meth)acrylat, Cyclohexyl(meth)acrylat, Glycidyl(meth)acrylat, Ethylenglykolmono(meth)acrylat, Diethylenglykolmono(meth)acrylat, Triethylenglykolmono(meth)acrylat, Allyl(meth)-acrylat, 2-Ethoxyethyl(meth)acrylat, 2-Dimethylaminoethyl(meth)acrylat, Ethylenglykoldi(meth)acrylat, Diethylenglykoldi(meth)acrylat, Triethylenglykoldi(meth)acrylat, Butylenglykoldi(meth)acrylat, Neopentylglykoldi(meth)acrylat, Pentaerythrittri(meth)acrylat, Pentaerythrittetra(meth)acrylat und Trimethylolpropantri(meth)acrylat sowie Prepolymere dieser Monomeren. Die Bezeichnung "(Meth)acryl" bezieht sich sowohl auf Acrylsäureverbindungen als auch Methacrylsäureverbindungen.

Die Komponente (C) ist jedoch nicht auf diese (Meth)acrylmonomeren und -prepolymeren beschränkt, sondern es können auch andere copolymerisierbare Verbindungen eingesetzt werden, z.B. Allylverbindungen, wie Allylalkohol und Allylglycidylether; N-Vinylpyrrolidon; Styrol; Divinylbenzol; Diallylphthalat; Dihydroxyverbindungen, wie Bisphenol A; und Aminoverbindungen, wie ε-Aminocapronsäure.

Der Mengenanteil der Komponente (C) beträgt gewöhnlich 0 bis 50, vorzugsweise 0 bis 30 Gewichtsprozent, bezogen auf das Gesamtgewicht der Kleb- und Dichtungsmasse.

Andere Additive

Neben den vorstehend beschriebenen Komponenten (A), (B) und gegebenenfalls (C) können die erfindungsgemäßen Kleb- und Dichtungsmassen andere übliche Additive enthalten, z.B. organische Lösungsmittel, Färbemittel, (Farbstoffe oder Pigmente), Füllstoffe und Oxidationsinhibitoren.

Anwendung

Die erfindungsgemäßen Kleb- und Dichtungsmassen können nach üblichen Methoden auf das abzudichtende oder zu verklebende Substrat aufgebracht werden, z.B. durch Aufstreichen, Aufwalzen oder Einpressen mittels geeigneter Spritzen oder Pressen. Gegebenenfalls kann vor der Anwendung eine thermische oder photochemische Vorhärtung durchgeführt werden, um die Viskosität der Kleb- und Dichtungsmasse zu erhöhen.

Anschließend werden die Kleb- und Dichtungsmassen thermisch oder durch Bestrahlung, z.B. mit IR- oder UV-Strahlung, gehärtet. Für die thermische Härtung werden Temperaturen von Raumtemperatur bis 200°C, vorzugsweise 50 bis 150°C, angewandt. Bei temperaturempfindlichen Substraten, z.B. zum Verschließen von Ganzglas-Doppelscheiben, ist die UV-Härtung bevorzugt, die mit üblichen UV-Lichtquellen durchgeführt wird, z.B. Quecksilberlampen.

Die Aushärtung der Kleb- und Dichtungsmassen kann bei Normaldruck, erhöhtem oder vermindertem Druck an der Luft oder in einer Inertatmosphäre erfolgen.

Die erfindungsgemäßen Kleb- und Dichtungsmassen eignen sich zum Verbinden und Abdichten von Substraten aus den verschiedensten Werkstoffen, z.B. aus Glas, Metallen, wie Aluminium, oder Kunststoffen, wie Polycarbonat.

Aufgrund ihrer in einem breiten Temperaturbereich beständig guten elastichen und Klebeigenschaften können die erfindungsgemäßen Kleb- und Dichtungsmassen z.B. als Verbund- und Einglasungsmaterial, insbesondere für Schalldämm- und Brandschutz-Verbundgläser verwendet werden.

Ein weiteres spezielles Anwendungsgebiet ist der Verschluß von Ganzglas-Doppelscheiben. Hierbei werden ausgezeichnet haftende Dichtungspfropfen erhalten, die zwischen -30 und +80°C und im Druckbereich von 0,5 bis 1,5 bar temperaturwechselbeständig sind und eine Wasserdampfdurchlässigkeit $\leq$ 1,3 g $H_2O$/ ($m^2$ • 24h) zeigen. Zur weiteren Verminderung der Wasserdampfdurchlässigkeit kann die Abdichtungsstelle zusätzlich mit einer Aluminiumfolie überklebt werden, wobei sich die ebenfalls gute Haftung des Dichtungsmaterials auf metallischen Oberflächen positiv auswirkt.

Das folgende Beispiel erläutert die Erfindung, ohne sie zu beschränken.

Beispiel

Herstellung eines Kieselsäureheteropolykondensats

In einem mit Rührer, Tropftrichter und Rückflußkühler ausgerüsteten Kolben werden 6000 ml wasserfreies Ethanol zum Sieden erhitzt und gerührt, worauf man eine Mischung von 1100 g (7,80 Mol) Methylvinyldichlorsilan, 988 g (3,90 Mol) Diphenyldichlorsilan und 62 g (0,25 Mol) Tetraethoxysilan so rasch zutropft, daß die Ethanollösung refluxiert. Nach Zugabe der Silankomponenten wird weitere 2 Stunden unter Rückfluß erhitzt; dabei entweichen über den Rückflußkühler Chlorwasserstoff und Ethylchlorid, die in einer auf -78°C gekühlten Falle aufgefangen werden. Es entsteht eine schwach gelbe, klare Lösung, aus der das Lösungsmittel im Wasserstrahlvakuum bei 70°C abgezogen wird. Das als Rückstand erhaltene Vorkondensat stellt eine leicht viskose, schwach gelbe Flüssigkeit dar. Das Vorkondensat wird 24 Stunden bei Raumtemperatur aufbewahrt und dann solange mit Ethanol gewaschen, bis es pH 5 aufweist. Das Waschen mit Ethanol erfolgt hierbei jeweils derart, daß man 50 Vol.-% Ethanol zusetzt und dann die Lösung im Wasserstrahlvakuum bei 70°C eindampft.

Zur Weiterkondensation wird das eingedampfte Vorkondensat in 1800 ml Aceton gelöst, worauf man potentiometrisch den HCl-Gehalt der Lösung bestimmt. Die Lösung wird zum Sieden erhitzt und in der Siedehitze rasch mit 887 ml (49,20 Mol $H_2O$) einer Mischung aus Wasser und wässriger 1N HCl versetzt. Die Menge an wässriger 1N HCl wird so gewählt, daß in der Mischung aus Vorkondensat, Aceton und Wasser $10^1$ Mol/l HCl enthalten sind.

Das Wasser wird so rasch zugetropft, daß keine Emulsion (Trübung) entsteht. Danach wird die klare Lösung 30 Minuten am Sieden gehalten, wobei nach 20 bis 30 Minuten allmählich eine weiße Trübung durch das ausfallende Kondensat auftritt. Die trübe Emulsion wird im Wasserstrahlvakuum bei 70°C eingedampft.

Der viskose, weiße, trübe Rückstand wird im Wasserstrahlvakuum auf 180°C erhitzt und bei dieser Temperatur unter Vakuum und kräftigem Rühren gehalten, wobei das Produkt silicatisch aushärtet. Der Härtungsverlauf wird IR-spektroskopisch und viskosimetrisch verfolgt, wobei darauf geachtet wird, daß noch freie Silanolgruppen vorhanden sind.

Das schließlich erhaltene Produkt ist klar und gelblich, bei Raumtemperatur hochviskos, aber noch gießbar, und wird mit zunehmender Temperatur dünnflüssiger.

Photochemische Vorhärtung des Kieselsäureheteropolykondensats

In einen Kolben werden 50,0 g des erhaltenen Kieselsäureheteropolykondensats (Zusammensetzung in Gewichtsprozent: 65 MeViSiO/32,5 $Ph_2SiO$/2,5$SiO_2$) und 55,0 mg (0,11 Gewichtsprozent, bezogen auf das Gewicht der Mischung) 1-Hydroxycyclohexylphenylketon eingewogen. Der Kolben wird verschlossen und in ein Ölbad von 60°C gestellt. Bei dieser Temperatur wird der Kolbeninhalt 20 Minuten gerührt.

Anschließend wird die homogene Mischung in 2 ml-Polypropylen-Einwegspritzen umgefüllt, wobei eventuell entstehende Luftblasen dadurch entfernt werden, daß man die Spritzen mit dem Stempel nach unten 20 Minuten in einen Trockenschrank von 80°C stellt.

Nach dem Abkühlen auf Raumtemperatur werden die Spritzen ca. 25 Minuten von gegenüberliegenden Seiten mit UV-Licht aus zwei 300 W UV-Lampen bestrahlt, wobei man mit einem Ventilator kühlt. Der Abstand zwischen jeder Lichtquelle und der Probe beträgt 5 cm, zwischen Ventilator und Probe 15 cm.

Verschließen von Ganzglas-Doppelscheiben mit dem photochemisch vorgehärteten Dichtungsmaterial

Das vorstehend erhaltene vorgehärtete und dadurch teilweise organisch quervernetzte Dichtungsmaterial wird spätestens 48 Stunden nach der Vorhärtung aus den Polypropylenspritzen in die Öffnungen von zu verschließenden Ganzglas-Doppelscheiben derart eingespritzt, daß keine Gasblasen in den Dichtungspfropfen entstehen. Zur Aushärtung des Dichtungsmaterials wird dann 45 Minuten mit einer 300 W UV-Lampe bestrahlt, die in einem Abstand von 5 cm senkrecht zum Dichtungspfropfen angeordnet ist.

**Patentansprüche**

1. Kleb- und Dichtungsmassen auf Basis von Kieselsäureheteropolykondensaten, enthaltend

(A) mindestens ein Kieselsäureheteropolykondensat, das erhalten worden ist durch Kondensation von

(a) einem oder mehreren Organosilanen der Formel I

$$R_mSiX_{4-m} \qquad (I)$$

in der R Alkyl, Alkenyl, Aryl, Alkylaryl, Arylalkyl, Alkenylaryl oder Arylalkenyl bedeutet, X Wasserstoff, Halogen, Hydroxy, Alkoxy, Acxyloxy oder die Gruppe $-NR'_2$ (R' = Wasserstoff oder Alkyl) darstellt und m den Wert 1, 2 oder 3 hat; und

(b) einem oder mehreren siliciumfunktionellen Silanen der allgemeinen Formel II

$$SiX_4 \qquad (II)$$

in der X die vorstehende Bedeutung hat, jedoch nicht alle Reste X Wasserstoff sind;

und gegebenenfalls einer oder mehreren der folgenden Komponenten (c) und/oder (d);

(c) einem oder mehreren organofunktionellen Silanen der allgemeinen Formel III

$$R_n(R''Y)_pSiX_{(4-n-p)} \ (III)$$

in der R und X die vorstehende Bedeutung haben, R'' Alkylen, Alkenylen, Arylen, Alkylenarylen oder Alkenylenarylen bedeuten, wobei diese Reste durch Sauerstoff- oder Schwefelatome oder –NH-Gruppen unterbrochen sein können, Y Halogen oder eine gegebenenfalls substituierte Amino-, Amid-, Aldehyd-, Alkylcarbonyl-, Carboxy-, Hydroxy-, Mercapto-, Cyano-, Alkoxy-, Alkoxycarbonyl-, Sulfonsäure-, Phosphorsäure-, Acryloxy-, Methacryloxy-, Epoxy- oder Vinylgruppe ist, n den Wert 0, 1 oder 2 und p den Wert 1, 2 oder 3 haben, wobei n + p den Wert 1, 2 oder 3 hat;

(d) einem oder mehreren im Reaktionsmedium löslichen, schwerflüchtigen Oxiden eines Elementes der Hauptgruppen Ia bis Va oder der Nebengruppen IVb oder Vb des Periodensystems mit Ausnahme von Titan und Zirkon oder einer oder mehreren im Reaktionsmedium löslichen, unter den Reaktionsbedingungen ein schwerflüchtiges Oxid bildenden Verbindungen eines dieser Elemente mit Ausnahme von Titan und Zirkon;

wobei mindestens eine Ausgangskomponente für das Kieselsäureheteropolykondensat (A) mindestens eine reaktive Gruppe aufweist, die in Gegenwart des Katalysators (B) sowie des gegebenenfalls verwendeten copolymerisierbaren organischen Monomers (C) eine organische Vernetzungsreaktion eingeht und wobei anstelle der Silane (a), (b) und (c) vorkondensierte, im Reaktionsmedium lösliche Oligomere dieser Silane eingesetzt werden können, gegebenenfalls in Gegenwart eines organischen Lösungsmittels und gegebenenfalls eines Kondensationskatalysators,

(B) mindestens einen thermisch oder UV-aktiven Polymerisations- oder Vernetzungskatalysator sowie gegebenenfalls

(C) mindestens ein mit dem Kieselsäureheteropolykondensat copolymerisierbares organisches Monomer oder Prepolymer.

2. Kleb- und Dichtungsmassen nach Anspruch 1, dadurch gekennzeichnet, daß sie, bezogen auf das Gesamtgewicht, 0,01 bis 5 Gewichtsprozent der Komponente (B) und 0 bis 50 Gewichtsprozent der Komponente (C) enthalten.

3. Kleb- und Dichtungsmassen nach Anspruch 1 oder 2, dadurch gekennzeichnet, daß zur Herstellung des Kieselsäureheteropolykondensats (A), bezogen auf die Gesamt-Molzahl der Ausgangskomponenten, 50 bis 100 Molprozent der Komponente (a), 0 bis 50 Molprozent der Komponente (b), 0 bis 50 Molprozent der Komponente (c) und 0 bis 30 Molprozent der Komponente (d) verwendet worden sind.

4. Kleb- und Dichtungsmassen nach einem der Ansprüche 1 bis 3, dadurch gekennzeichnet, daß zur Herstellung des Kieselsäureheteropolykondensats (A) die Ausgangskomponenten nicht-hydrolytisch oder in Gegenwart einer geringeren Wassermenge als der zur vollständigen Hydrolyse der vorhandenen hydrolysierbaren Gruppen stöchiometrisch erforderlichen Menge vorkondensiert und anschließend unter Zugabe mindestens der Wassermenge, die zur Hydrolyse der verbliebenen hydrolysierbaren Gruppen erforderlich ist, weiterkondensiert worden sind.

5. Kleb- und Dichtungsmassen nach einem der Ansprüche 1 bis 4, dadurch gekennzeichnet, daß die Komponente (C) ein (Meth)acrylmonomer oder -prepolymer ist.

6. Verwendung der Kleb- und Dichtungsmassen nach einem der Ansprüche 1 bis 5 zum Verbinden oder Abdichten von Substraten aus Glas, Metallen, Kunststoffen oder anderen Werkstoffen.

7. Verwendung der Kleb- und Dichtungsmassen nach einem der Ansprüche 1 bis 5 zum Verschließen von Ganzglas-Doppelscheiben.

8. Verwendung der Kleb- und Dichtungsmassen nach einem der Ansprüche 1 bis 5 als Verbund- und Einglasungsmaterial, insbesondere für Schalldämm- und Brandschutz-Verbundgläser.

9. Verwendung nach einem der Ansprüche 6 bis 8, dadurch gekennzeichnet, daß die Kleb- und Dichtungsmasse thermisch und/oder durch UV-Bestrahlung gehärtet wird.

**Claims**

1. Adhesive and sealant compositions based on silica heteropolysiloxanes, containing:
(A) at least one silica heteropolycondensate which has been obtained by condensation of
(a) one or more organosilanes of formula (I)

$$R_mSiX_{4-m} \qquad (I)$$

in which R denotes alkyl, alkenyl, aryl, alkylaryl, arylalkyl, alkenylaryl or arylalkenyl; X represents hydrogen, halogen, hydroxyl, alkoxy, acyloxy or the $-NR'_2$ group (R'= hydrogen or alkyl); and m has the value 1, 2 or 3; and
(b) one or more silicon-functional silanes of the general formula II

$$SiX_4 \qquad (II)$$

in which X has the above meaning, but not all radicals X are hydrogen;
and, if appropriate, one or more of the following components (c) and/or (d);
(c) one or more organo-functional silanes of the general formula III

$$R_n(R''Y)_pSiX_{(4-n-p)} \qquad (III)$$

in which R and X have the above meaning; R″ denotes alkylene, alkenylene, arylene, alkylenearylene or alkenylenearylene, which radicals may be interrupted by oxygen or sulfur atoms or -NH groups; Y is halogen or an optionally substituted amino, amide, aldehyde, alkylcarbonyl, carboxyl, hydroxyl, mercapto, cyano, alkoxy, alkoxycarbonyl, sulfonic acid, phosphoric acid, acryloxy, methacryloxy, epoxy or vinyl group; n has the value 0, 1 or 2; and p has the value 1, 2 or 3, with n + p having the value 1, 2 or 3;
(d) one or more non-volatile oxides, soluble in the reaction medium, of an element of main groups Ia to Va or subgroups IVb or Vb of the Periodic System, with the exception of titanium and zirconium, or one or more compounds of one of these elements, except titanium and zirconium, which are soluble in the reaction medium and form a non-volatile oxide under reaction conditions;
wherein at least one starting component for the silica heteropolycondensate (A) exhibits at least one reactive group which, in the presence of catalyst (B) and the optionally used copolymerizable organic monomer (C), enters an organic crosslinking reaction and wherein, instead of the silanes (a), (b) and (c), precondensed, reaction medium-soluble oligomers of these silanes can be employed, optionally in the presence of an organic solvent and optionally of a condensation catalyst.
(B) at least one thermally or UV-active polymerization or crosslinking catalyst, and, optionally,
(C) at least one organic monomer or prepolymer copolymerizable with the silica heteropolycondensate.

2. Adhesive and sealant compositions according to claim 1, wherein said compositions, based on the total weight, contain 0.01 to 5 percent by weight of component (B) and 0 to 50 percent by weight of component (C).

3. Adhesive and sealant compositions according to claims 1 or 2, wherein the silica heteropolysiloxane (A) has been prepared using 50 to 100 mole percent of component (a), 0 to 50 mole percent of component (b), 0 to 50 mole percent of component (c), and 0 to 30 mole percent of component (d), based on the total number of moles of the starting components.

4. Adhesive and sealant compositions according to any one of claims 1 to 3, wherein for the preparation of the silica heteropolycondensate (A) the starting components have been precondensed non-hydrolytically or in the presence of an amount of water smaller than the amount which is stoichiometrically

required for the complete hydrolysis of the hydrolyzable groups present, and subsequently further condensed by adding at least the amount of water necessary for the hydrolysis of the remaining hydrolyzable groups.

5. Adhesive and sealant compositions according to any one of claims 1 to 4, wherein component (C) is a (meth)acryl monomer or prepolymer.

6. The use of the adhesive and sealant compositions according to any one of claims 1 to 5 for bonding or sealing substrates of glass, metals, plastics or other materials.

7. The use of the adhesive and sealant compositions according to any one of claims 1 to 5 for sealing all-glass double panes.

8. The use of the adhesive and sealant compositions according to any one of claims 1 to 5 as laminating and glass-mounting material, in particular for sound-absorbing and fire-proofing laminated glasses.

9. The use according to any one of claims 6 to 8 wherein the adhesive and sealant compositions are cured thermally and/or by UV irradiation.

## Revendications

1. Compositions adhésives et de scellement, à base d'hétéropolycondensats de l'acide silicique, contenant

(A) au moins un hétéropolycondensat d'acide silicique, qui a été obtenu par condensation de

(a) un ou plusieurs organosilanes de formule (I)

$$R_mSiX_{4-m} \qquad (I)$$

dans laquelle R représente un groupe alkyle, alcényle, aryle, alkylaryle, arylalkyle, alcénylaryle ou arylalcényle ; X représente un atome d'hydrogène ou d'halogène, un groupe hydroxy, alcoxy, acyloxy ou le groupe $-NR'_2$ (R, représentant un atome d'hydrogène ou un groupe alkyle) et m vaut 1, 2 ou 3 ; et de

(b) un ou plusieurs silanes à groupes fonctionnels fixés sur le silicium, de formule générale II

$$SiX_4 \qquad (II)$$

dans laquelle X a le sens précité, mais où les restes X ne peuvent pas tous représenter de l'hydrogène ; et éventuellement un ou plusieurs des composants (c) et/ou (d) suivants ; de (c) un ou plusieurs silanes organofonctionnels, de formule générale III,

$$R_n(R''Y)_pSiX_{(4-n-p)} \ (III)$$

dans laquelle R et X ont le sens précité ; R'' représente un groupe alkylène, alcénylène, arylène, alcénylarylène ou alcénylène-arylène, ces restes pouvant être interrompus par des atomes d'oxygène ou de soufre ou par des groupes -NH- ;

Y représente un atome d'halogène ou un groupe amino, amide, aldéhyde, alkylcarbonyle, carboxy, hydroxy, mercapto, cyano, alcoxy, alcoxycarbonyle, acide sulfonique, acide phosphorique, acryloxy, méthacryloxy, époxy ou vinyle, éventuellement substitués ; n vaut 0, 1 ou 2, et p vaut 1, 2 ou 3, la somme n + p valant 1, 2 ou 3 ;

(d) un ou plusieurs oxydes, solubles dans le mélange réactionnel et peu volatils, d'un élément des groupes principaux 1a à Va ou des sous-groupes IVb ou Vb du système périodique, à l'exclusion du titane et du zirconium, ou bien un ou plusieurs composés solubles dans le milieu de réaction, d'un de ces éléments (à l'exclusion du titane et du zirconium) formant dans les conditions de réaction un oxyde peu volatil ;

au moins un composant de départ pour l'obtention de l'hétéropolycondensat d'acide silicique (A) présentant au moins un groupe réactif qui, en présence du catalyseur (B) ainsi que du monomère organique (C) copolymérisable éventuellement utilisé, entre dans une réaction de réticulation organique et, au lieu des silanes (a), (b) et (c), on peut utiliser des oligomères de ces silanes précondensés, solubles dans le milieu de réaction, en opérant éventuellement en présence d'un solvant organique et éventuellement d'un catalyseur de condensation,

(B) au moins un catalyseur de polymérisation ou de réticulation, thermiquement actif ou actif sous l'influence des rayons ultraviolets, ainsi que, éventuellement

(C) au moins un monomère organique ou prépolymère copolymérisable avec l'hétéropolycondensat d'acide silicique.

2. Compositions adhésives et de scellement selon la revendication 1, caractérisées en ce qu'elles contiennent, par rapport au poids total, 0,01 à 5 % en poids du composant (B) et 0 à 50 % en poids du composant (C).

3. Compositions adhésives et de scellement selon la revendication 1 ou 2, caractérisées en ce que, pour préparer l'hétéropolycondensat d'acide silicique (A), on a utilisé, sur la base de la quantité molaire

totale des composants de départ, 50 à 100 moles % du composant (a), 0 à 50 moles % du composant (b), 0 à 50 moles % du composant (c) et 0 à 30 moles % du composant (d).

4. Compositions adhésives et de scellement selon l'une des revendications 1 à 3, caractérisées en ce que, pour la préparation de l'hétéropolycondensat d'acide silicique (A), les composants de départ ont été précondensés, de manière non hydrolytique ou bien en opérant en présence d'une quantité d'eau inférieure à celle stoéchiométriquement nécessaire pour une hydrolyse complète des groupes hydrolysables présents, puis la condensation a été poursuivie avec addition d'au moins la quantité d'eau nécessaire pour hydrolyser les groupes hydrolysables restants.

5. Compositions adhésives et de scellement selon l'une des revendications 1 à 4, caractérisées en ce que le composant (C) est un monomère ou prépolymère (meth)acrylique.

6. Utilisation des compositions adhésives et de scellement selon l'une des revendications 1 à 5 pour coller et relier, ou bien sceller ou rendre étanches des substrats en verre, en des métaux, en des matières plastiques ou en d'autres matériaux.

7. Utilisation des compositions adhésives ou de scellement selon l'une des revendications 1 à 5 pour sceller des doubles vitres entièrement en verre.

8. Utilisation des compositions adhésives et de scellement selon l'une des revendications 1 à 5 comme matière de liaison pour l'obtention de verre de sécurité et pour la vitrification, en particulier pour les verres de sécurité destinés à un amortissement acoustique et à une protection contre l'incendie.

9. Utilisation selon l'une des revendications 6 à 8, caractérisée en ce que la composition adhésive et de scellement a été durcie par voie thermique et/ou par un rayonnement ultraviolet.